# EUROPÄISCHE PATENTSCHRIFT

(11) **EP 1 629 726 B1**
(45) Veröffentlichungstag und Bekanntmachung des Hinweises auf die Patenterteilung: **12.03.2008**
(21) Anmeldenummer: 05013557.3
(22) Anmeldetag: 23.06.2005
(51) Int. Cl.: A23L 1/275, A23L 1/32, B44D 2/00, B05C 3/02

(54) **Verfahren zur Färbung von Eiern mittels einer Farbübertragungskomponente**
Process for colouring eggs using a component for assisting the colour transfer
Procédé de coloration des oeufs au moyen d'un composant de transfert de couleur

(30) Priorität: 07.07.2004 DE 102004032881
(43) Veröffentlichungstag der Anmeldung: 01.03.2006
(73) Patentinhaber: Brauns-Heitmann GmbH & Co. KG, 34414 Warburg (DE)
(72) Erfinder: Gibbels, Uwe Dr., 34414 Warburg (DE); Füser, Katja, 59602 Rüthen (DE); Wieczorek, Maria, 34434 Borgenstreich (DE)
(74) Vertreter: Maxton Langmaack & Partner

(56) Entgegenhaltungen:
- US-A- 3 745 973
- US-A- 4 181 745
- US-A- 4 967 687
- US-A- 5 787 838
- "Easter egg coloring kits"[Online] 10. April 2003 (2003-04-10), Seiten 1-3, XP002346304 Gefunden im Internet: URL:http://www.nbc4.com/productsandservice sarchive/2104828/detail.html> [gefunden am 2005-09-23]

## Beschreibung

Die vorliegende Erfindung betrifft ein Verfahren zur Färbung von Eiern sowie ein Set zur Durchführung eines solchen Verfahrens.

Für das Färben von Eiern, insbesondere auch Ostereiern, sind seit langem zwei grundsätzlich voneinander verschiedene Verfahren bekannt. Bei dem einen Färbeverfahren werden Eier zunächst gekocht und anschließend in ein Tauchbad, welches ein Farbmittel enthält, gelegt und somit gefärbt, oder aber dem Kochwasser der Eier wird bereits ein wärmebeständiges Farbmittel zugegeben, so dass gleichzeitig eine Färbung erfolgen kann. Bei den weiteren aus dem Stand der Technik bekannten Verfahren werden gekochte Eier oder aber auch ausgeblasene Eier von Hand mit entsprechenden Farbmitteln, insbesondere auch auf Gelatinebasis, gefärbt und bemalt.

Das bekannte Tauchbadverfahren hat den entscheidenden Nachteil, dass mit diesem einerseits braunschalige Eier nicht vernünftig gefärbt werden können, andererseits eine akzeptable Färbung bei nur etwa 95% der gefärbten Eier erzielt wird. Ursächlich hierfür sind insbesondere auf der Eischale befindliche Fettreste oder aber unterschiedliche Oberflächenbeschaffenheiten der Eischalen selbst. Zudem muss, um eine ausreichend intensive Färbung zu erzielen, eine relativ hohe Konzentration des eingesetzten Farbmittels, in aller Regel eines wasserlöslichen Farbstoffs, gewählt werden. Zudem läuft die Farbmittellösung bei Entnahme des Eis aus dem Tauchbad von der Eischale ab und verbleibt nicht auf dieser, so dass auch hierdurch die Erzielung einer intensiven Färbung der Eioberfläche erschwert ist.

US 4,181,745 offenbart nun ein Eierfärbeverfahren, bei dem in einer ersten Ausführungsform ein Farbmittel in einen Behälter, insbesondere einen Kunststoffbeutel, und nachfolgend ein beispielsweise mit Wasser befeuchtetes Ei gegeben wird. Durch Bewegung des Eies in dem Beutel erlangt dieses eine vollständige Färbung. Das eingesetzte Farbmittel ist dabei als Granulat ausgebildet.

Gemäß dem Internetauszug http://ww.nbc4.com/productsandservicearchive/2104828/ detail.html vom 10.04.2003 "Easter Egg Coloring Kits" wird allgemein ein Verfahren zum Färben von Eiern unter Einsatz eines Farbmittels offenbart, wobei das Ei in ein Gewebe gewickelt wird, nachfolgend in ein Plastikgefäß gegeben wird, und anschließend mit Farbmitteln in Form von Tropfen bespritzt wird.

Es besteht somit Bedarf an einem Färbeverfahren für Eier, insbesondere für gekochte Eier, mittels welchem eine gleichmäßige und intensive Färbung aller Eier erzielt wird.

Diese Aufgabe wird gemäß der vorliegenden Erfindung dadurch gelöst, dass ein Verfahren zur Färbung von Eiern zur Verfügung gestellt wird, wobei
- in einem ersten Schritt in einem Behälter eine Mischung, umfassend mindestens eine körnige Farbübertragungskomponente und mindestens ein Farbmittel, vorgelegt wird;
- in einem zweiten Schritt mindestens ein Ei in den Behälter gegeben und dieses mit der das Farbmittel übertragenden Komponente geschüttelt wird; und
- in einem dritten Schritt das gefärbte Ei dem Behälter entnommen wird.

Mittels des erfindungsgemäßen Verfahrens lassen sich vorteilhafterweise alle Arten von Eiern gleichmäßig und je nach Menge des zugesetzten Farbmittels auch intensiv färben. Insbesondere ist es je nach Wahl des eingesetzten Farbmittels auch möglich, braunschalige Eier zu färben.

Vorteilhafterweise kann ein erwärmtes Ei im zweiten Schritt eingesetzt werden. "Erwärmtes Ei" im Sinne der vorliegenden Erfindung bedeutet, dass es sich dabei um ein soeben gekochtes und aus dem Wassertopf entnommenes heißes Ei, aber auch ein bereits etwas abgekühltes Ei handeln kann, wobei die Eioberfläche eine Temperatur von mindestens 30°C, bevorzugt mindestens 45°C, aufweist. Das Ei selbst kann in jeglichem Kochgrad verwendet werden, also weich, mittel oder hart gekocht. Auch kann ein bereits gekochtes und sodann abgekühltes Ei zwecks Anwendung des erfindungsgemäßen Verfahrens nochmalig in einem Wasserbad erwärmt werden, bis die Eioberfläche eine ausreichende Temperatur aufweist.

Farbmittel im Sinne der Erfindung sind lösliche, einschließlich in Wasser und nichtwässrigen Lösemitteln löslich, Farbstoffe einerseits und unlösliche Pigmente bzw. Pigmentdispersionen andererseits. Umfasst hiervon sind insbesondere natürlich oder synthetische, insbesondere Lebensmittel-Farbstoffe und/oder Pigmente. Das Farbmittel im Sinne der Erfindung kann auch eine Mischung verschiedener Farbmittel zur Erzeugung von Mischfarben darstellen. Wird beispielsweise eine weiße Pigmentdispersion zur Färbung der Eischale verwendet, so kann hierdurch zunächst in einem ersten Schritt ein braunschaliges Ei vollständig weiß gefärbt und bei Wiederholung des erfindungsgemäßen Verfahrens das nunmehr weiße Ei in einem zweiten Schritt - gegebenenfalls nach Erwärmung - ganzflächig oder auch nur teilweise mit einem Farbmittel gefärbt werden. Vorteilhafterweise trocknet das eingesetzte Farbmittel bei dem erfindungsgemäßen Verfahren praktisch spontan auf der Eioberfläche auf bei Anwendung eines erwärmten Eis. Hierdurch ist es möglich, innerhalb kurzer Zeit vollflächige Färbungen auf einer Eioberfläche zu erzeugen, welche eine hohe Farbdichte sowie eine schöne brillante Einfärbung ergeben. Daher ist es auch ohne vorherige Umfärbung braunschaliger Eier mittels einer weißen Pigmentdispersion möglich, braunschalige Eier im Unterschied zu dem bekannten Tauchbadverfahren in akzeptabler Qualität zu färben.

Die Menge des eingesetzten Farbmittels kann je nach Wunsch und Anwendung variiert werden. Zur Erzielung einer vollflächigen Einfärbung der Eioberfläche werden relativ hohe Konzentrationen des Farbmittels eingesetzt. Ist nur eine punktuelle Einfärbung, insbesondere in Form eines Sprenkelmusters gewünscht, wird eine geringere Konzentration des Farbmittels eingesetzt. Bei der letztgenannten Anwendung kann das mit einem Farbmittel bei einer ersten Durchführung des erfindungsgemäßen Verfahrens erhaltene, mit einem Sprenkelmuster versehene Ei bei einer zweiten Durchführung des erfindungsgemäßen Verfahrens mit einem anderen Farbmittel - gegebenenfalls nach erneuter Erwärmung - mit einem zweiten Sprenkelmuster versehen werden, so dass sich hierdurch sehr schöne Effekte erzielen lassen. Grundsätzlich kann das erfindungsgemäße Verfahren mit unterschiedlichen Farbmitteln beliebig oft wiederholt werden, bis sich die gewünschte Färbung bzw. das gewünschte Färbemuster auf der Eioberfläche einstellt.

In einer bevorzugten Ausführungsform des erfindungsgemäßen Verfahrens ist der erste Schritt unterteilt in einen ersten Teilschritt, in welchem in den Behälter mindestens eine körnige Farbübertragungskomponente gegeben wird, und in einen zweiten Teilschritt, wobei nachfolgend das mindestens eine Farbmittel in den Behälter gegeben und dieses mit der Farbübertragungskomponente vermischt wird. Hierdurch ist es vorteilhafterweise möglich, insbesondere im Hinblick auf die Abpackung und das In-denVerkehr-Bringen von Sets zur Durchführung des erfindungsgemäßen Verfahrens, die Farbübertragungskomponente getrennt von den einzusetzenden Farbmitteln zu verpacken. Zudem kann dann das Farbmittel frisch in der gewünschten Konzentration der Farbübertragungskomponente zugegeben werden, wodurch individuelle Färbungsergebnisse erzielt werden. Selbstverständlich ist es auch möglich, eine bereits mit einem Farbmittel in einer bestimmten Konzentration versehene Farbübertragungskomponente, welche fertig verpackt zur Verfügung gestellt wird, einzusetzen. Hier kann gegebenenfalls nachträglich noch die Konzentration durch Zugabe weiterer Farbmittel erhöht werden. Grundsätzlich lassen sich durch Zumischung unterschiedlicher Farbmittel auch Mischfarben erzielen, welche dann der Farbübertragungskomponente zugegeben werden. Hierbei würde beispielsweise noch vor dem ersten Schritt des erfindungsgemäßen Verfahrens eine Mischung zweier Farbmittel erfolgen, wobei dann diese Mischung anschließend der Farbübertragungskomponente zugegeben wird. Es können aber auch zwei unterschiedlich farbige Farbmittel direkt zu der Farbübertragungskomponente gegeben werden, ohne dass eine vorherige Mischung erfolgt.

Als "Farbübertragungskomponente" im Sinne der vorliegenden Erfindung wird eine Komponente/Materiäl verstanden, welches in der Lage ist, mit einem Farbmittel, gegebenen falls auch nur mit einem Farbmittelüberzug, versehen zu werden und dieses Farbmittel anschließend auf die Oberfläche eines Eis zu übertragen. Dabei kann das Farbmittel teilweise von der Farbübertragungskomponente aufgesogen sein.

Vorteilhafterweise wird das von der Farbübertragungskomponente aufgenommene bzw. das diese überziehende Farbmittel durch Zugabe von Wasser reaktiviert. Hierdurch ist es möglich, bereits einmal verwendete Mischungen der Farbübertragungskomponente mit einem Farbmittel bzw. einer Mischung von Farbmischungen bei einer Mischfarbe, welches gegebenenfalls längere Zeit nicht mehr benutzt wurde, nochmalig einzusetzen. Dadurch wird der Verbrauch an dem eingesetzten Farbmittel reduziert. Hierbei werden insbesondere wasserlösliche Farbstoffe oder Wasserdispersion bildende Pigmente Verwendung finden.

Zur Erzeugung einer mehrfarbigen Färbung auf einem Ei/einer Eioberfläche werden die Schritte des erfindungsgemäßen Verfahrens vorteilhafterweise mit weiteren Farbmitteln wiederholt. Zusätzlich kann dabei weiter vorteilhafterweise von der Mischung, umfassend mindestens eine körnige Farbübertragungskomponente und mindestens ein Farbmittel, zusätzlich ein Fixiermittel und/oder Bindemittel umfasst werden. Hierdurch kann vorteilhafterweise vermieden werden, dass sich bei Entnahme des gefärbten Eis aus dem Behälter Farbe auf die Hände überträgt. Selbstverständlich kann hier vorgesehen werden, dass dem Set zur Durchführung des erfindungsgemäßen Verfahrens Einmalhandschuhe beigegeben werden, wodurch eine Verunreinigung der Hände mit dem Farbmittel vermieden wird. Durch die Zugabe eines Fixier- und/oder Bindemittels wird die Auftrocknung des Farbmittels auf der Eioberfläche noch weiter beschleunigt, so dass auch bei der Verwendung stärker abgekühlter Eier eine schnelle Auftrocknung des Farbmittels auf der Eioberfläche erzielt wird.

Vorteilhafterweise sind die verwendeten Farbmittel Lebensmittelfarben, wobei als Farbmittel weiter vorteilhafterweise ein wasserlöslicher Farbstoff verwendet wird, weiter bevorzugt ein Farbstoff, der in Ethanol oder einem anderen nichtwässrigen Lösungsmittel oder aber Mischungen solcher löslich ist. Mit derartigen Farbstoffen können insbesondere auch erkaltete Eier zuverlässig gefärbt werden. In einer alternativen Ausführungsform kann als Farbmittel auch eine Pigmentdispersion, beispielsweise eine weiß farbige, verwendet werden. Bei Verwendung eines Farbstoffs auf Alkoholbasis, wobei hier unter Alkohol insbesondere Ethanol verstanden wird, kann durch den niedrigen Siedepunkt des Lösemittels Alkohol bei Einsatz des gewärmten Eis, hier insbesondere eines Eis mit einer Eischalenoberflächentemperatur von etwa 45°C oder mehr, eine äußerst spontane Auftrocknung des Farbmittels auf der Eioberfläche erzielt werden. Dann ist auch der Zusatz eines Fixier- und/oder Bindemittels nicht vonnöten. Auch Farben mit einem hohen Anteil Bindemittel trocknen sehr schnell und nicht klebend auf. Das Ei kann ziemlich wasserfest regelrecht lackiert werden.

Der in dem erfindungsgemäßen Verfahren eingesetzte Behälter ist vorzugsweise ein flexibler Kunststoffbecher mit einem Deckel, wobei der Becher selbst aus einem durchsichtigen oder aber weißen, aber auch andersfarbigem Kunststoff, insbesondere aus einem Polyethylen oder Polypropylen, ist, wohingegen der Deckel bevorzugt aus einem durchsichtigen Kunststoff gebildet ist. Vorteilhafterweise sind die Wandungen des Behälters, welche im Sinne der Erfindung auch den Boden desselben sowie bei aufgesetztem Deckel auch den Deckel umfassen, flexibel ausgebildet. Hierdurch wird der Vorteil erzielt, dass das Ei beim Schütteln im zweiten Schritt des erfindungsgemäßen Verfahrens nicht beschädigt wird, insbesondere die Eischale nicht aufplatzt. Würde ein starrer Behälter, beispielsweise ein Metallbecher, Anwendung finden, würde die Eischale bei Schütteln des sich im Behälter befindlichen Eis platzen können.

Die vorliegende Erfindung betrifft weiterhin ein Set zur Herstellung von gefärbten Eiern nach dem erfindungsgemäßen Verfahren, umfassend
- mindestens einen Behälter;
- mindestens eine Farbübertragungskomponente, ausgewählt aus einer Gruppe umfassend Reis, Linsen, Erbsen, Nudeln, Getreide, Mais, Haselnüsse, Walnüsse, Mandeln oder Mischungen derselben; und
- mindestens ein Farbmittel.

Einem solchen Set kann gegebenenfalls noch ein Satz Einmalhandschuhe beigegeben werden.

Die Auswahl der genannten körnigen Lebensmittelprodukte oder Mischungen derselben hat den Vorteil, dass hierdurch die an gefärbte Eier gestellten Anforderungen der entsprechenden Lebensmittelrichtlinien ohne Weiteres eingehalten werden können, da die vorgenannten Substanzen sämtliche Lebensmittel bzw. Lebensmittelprodukte darstellen. Lebensmittelprodukte im Sinne der vorliegenden Erfindung können insbesondere auch bearbeitete Lebensmittel wie beispielsweise gehackte und geröstete Haselnüsse, Walnüsse, Mandeln o.Ä. sein.

Weiter vorteilhafterweise weist das erfindungsgemäße Set zusätzlich ein Fixier- und/oder Bindemittel auf. Dabei ist das Fixier- und/oder Bindemittel ausgewählt aus einer Gruppe umfassend Stärke und/oder Gelatine. Dieses Fixiermittel kann dabei separat dem erfindungsgemäßen Set beigegeben sein. Es kann jedoch auch der Farbübertragungskomponente beigegeben sein, oder aber die Farbübertragungskomponente selbst weist das Fixier- und/oder Bindemittel selbst auf. Des Weiteren kann das Fixier- und/oder Bindemittel auch dem Farbmittel zugegeben sein.

In einer besonders bevorzugten Ausführungsform ist das Fixier- und/oder Bindemittel in der Farbübertragungskomponente enthalten. Beispielsweise weist Reis, welcher als Langkorn- oder Rundkornreis mit unterschiedlichen Körnungsgraden eingesetzt werden kann, Stärke auf. Bei Versetzung der Farbübertragungskomponente Reis mit einem Farbmittel, insbesondere einem wasserlöslichen Farbstoff, quillt der Reis etwas auf und gibt dabei Stärke ab. Diese setzt sich beim Schütteln des Eis auf der Eioberfläche ab und sorgt dafür, dass eine schnelle Auftrocknung des Farbmittels auf der Eioberfläche erfolgt und dieses somit in kurzer Zeit weiterverarbeitet, beispielsweise bei einer nochmaligen Durchführung des erfindungsgemäßen Verfahrens mit einem weiteren Farbmittel gefärbt werden kann. Darüber hinaus hat sich bei Versuchen ergeben, dass Reis besonders vorteilhafterweise als Farbübertragungskomponente verwendet werden kann, da dieser nicht nur relativ preisgünstig ist, sondern auch für eine zur Übertragung der Farbe sehr geeignete Außenkontur aufweist. Zudem kann er überschüssige Farbe in kurzer Zeit aufnehmen, so dass eine mögliche Überdosierung des Farbmittels durch den Anwender unproblematisch ist. Denn bereits nach kurzer Zeit stellt sich das System Farbübertragungskomponente/Farbmittel wieder so ein, dass die sich auf der Oberfläche des Reises befindliche Farbe die richtige Feuchtigkeit besitzt.

Diese und weitere Vorteile des erfindungsgemäßen Verfahrens werden anhand des folgenden Ausführungsbeispiels näher beschrieben:
1. Die Färbung eines Eis wurde mit den folgenden Substanzen durchgeführt:
   - 30 g getrockneter Langkornreis mit einer durchschnittlichen Länge in einem Bereich von 4 bis 6 mm als Farbübertragungskomponente;
   - 3 ml eines wasserlöslichen Farbstoffs, umfassend 5 Gew% Lisamingrün (E 142), und des Weiteren enthärtetes Wasser, Pufferungsmittel und Löse- bzw. Feuchthaltemittel, z.B. Glycerin; und
   - einen Kunststoffbecher aus Polyethylen mit einem durchsichtigen Deckel und flexiblen Wandungen und einem Volumen von 150 ml.

   Ein kurz zuvor hart gekochtes Ei wurde aus dem heißen Wasser eines Wassertopfs entnommen und mit einem Küchentuch abgetrocknet. In den Kunststoffbecher wurde der Reis eingegeben und nachfolgend das Farbmittel in der angegebenen Menge zugetropft. Anschließend wurde der Becher mit dem Deckel versehen und die Farbübertragungskomponente mit dem Farbmittel vermischt. Dann wurde der Deckel abgenommen und das zwischenzeitlich auf eine Temperatur der Eioberfläche von 60°C abgekühlte gekochte Ei in den Becher mit der Mischung der Farbübertragungskomponente mit dem Farbmittel gegeben. Anschließend wurde der Deckel auf den Becher gegeben und das Ei mitsamt der Farbübertragungskomponente im Becher von Hand geschüttelt. Das Schütteln erfolgte dabei so lange, bis die gewünschte Färbung eintrat. Mit den angegebenen Mengen wurde bei einem etwa einminütigen Schütteln ein gesprenkeltes, farbintensives Muster auf der Eioberfläche erzeugt, so dass hier die Möglichkeit bestand, in einem zweiten Durchlauf des Verfahrens mit einem anderen Farbmittel, beispielsweise auf Basis des wasserlöslichen Farbstoffs Patentblau (E 131), das erhaltene grüne Sprenkelmuster mit einem blauen Sprenkelmuster zu ergänzen, so dass ein sehr effektvoll gefärbtes Ei erhalten wurde.

Die vorliegende Erfindung stellt somit ein Verfahren zur Verfügung, mit welchem einerseits hochintensive vollflächige Färbungen als auch Sprenkelmuster auf auch schlecht zu färbenden Eiern - einschließlich braunschaliger Eier - in hoher Farbintensität und Brillanz erhalten werden. Zudem ist das Verfahren für jedermann durchführbar, insbesondere auch für Kinder, welche durch den Schüttelschritt eine große Freude an der Durchführung des Verfahrens zeigen.

## Patentansprüche

1. Verfahren zur Färbung von Eiern, wobei
- in einem ersten Schritt in einem Behälter eine Mischung, umfassend mindestens eine Farbübertragungskomponente, ausgewählt aus einer Gruppe umfassend Reis, Linsen, Erbsen, Nudeln, Getreide, Mais, Haselnüsse, Walnüsse, Mandeln oder Mischungen derselben, und mindestens ein Farbmittel, vorgelegt wird;
- in einem zweiten Schritt mindestens ein Ei in den Behälter gegeben und dieses mit der das Farbmittel übertragenden Komponente geschüttelt wird; und
- in einem dritten Schritt das gefärbte Ei dem Behälter entnommen wird.

2. Verfahren gemäß Anspruch 1, **dadurch gekennzeichnet, dass** der erste Schritt unterteilt ist in einen ersten Teilschritt, in welchem in den Behälter mindestens eine körnige Farbübertragungskomponente gegeben wird, und einen zweiten Teilschritt, wobei nachfolgend das mindestens eine Farbmittel in den Behälter gegeben und dieses mit der Farbübertragungskomponente vermischt wird.

3. Verfahren gemäß einem der vorhergehenden Ansprüche, **dadurch gekennzeichnet, dass** das von der Farbübertragungskomponente aufgenommene Farbmittel durch Zugabe von Wasser reaktiviert wird.

4. Verfahren gemäß einem der vorhergehenden Ansprüche, **dadurch gekennzeichnet, dass** zur Erzeugung einer mehrfarbigen Färbung auf einem Ei die Schritte 1 bis 3 mit weiteren Farbmitteln wiederholt werden.

5. Verfahren gemäß einem der vorhergehenden Ansprüche, **dadurch gekennzeichnet, dass** zusätzlich von der Mischung ein Fixiermittel und/oder Bindemittel umfasst wird.

6. Verfahren gemäß einem der vorhergehenden Ansprüche, **dadurch gekennzeichnet, dass** als Farbmittel anorganische und/oder organische Farbstoffe und/oder Pigmente verwendet werden.

7. Verfahren gemäß einem der vorhergehenden Ansprüche, **dadurch gekennzeichnet, dass** die Farbmittel Lebensmittelfarben sind.

8. Verfahren gemäß einem der vorhergehenden Ansprüche, **dadurch gekennzeichnet, dass** als Farbmittel ein wasserlöslicher Farbstoff verwendet wird.

9. Verfahren gemäß einem der vorhergehenden Ansprüche, **dadurch gekennzeichnet, dass** ein Farbstoff, der in Ethanol oder einem anderen nichtwässrigen Lösungsmittel oder Mischungen solcher löslich ist, verwendet wird.

10. Verfahren gemäß einem der vorhergehenden Ansprüche, **dadurch gekennzeichnet, dass** als Farbmittel eine Pigmentdispersion verwendet wird.

11. Verfahren gemäß einem der vorhergehenden Ansprüche, **dadurch gekennzeichnet, dass** als Behälter ein Kunststoffbecher mit flexiblen Wandungen verwendet wird.

12. Set zur Herstellung von gefärbten Eiern nach dem Verfahren gemäß einem der Ansprüche 1 bis 11, umfassend mindestens einen Behälter, mindestens eine Farbübertragungskomponente, ausgewählt aus einer Gruppe umfassend Reis, Linsen, Erbsen, Nudeln, Getreide, Mais, Haselnüsse, Walnüsse, Mandeln oder Mischungen derselben, und mindestens ein Farbmittel.

13. Set gemäß Anspruch 12, **dadurch gekennzeichnet, dass** dieses zusätzlich ein Fixier- und/oder Bindemittel aufweist.

14. Set gemäß einem der Ansprüche 12 oder 13, **dadurch gekennzeichnet, dass** das Fixiermittel ausgewählt ist aus einer Gruppe umfassend Stärke und/oder Gelatineprodukte.

15. Set gemäß einem der Ansprüche 12 bis 14, **dadurch gekennzeichnet, dass** das Fixiermittel und/oder Bindemittel in der Farbübertragungskomponente enthalten ist.

## Claims

1. A method for colouring eggs, wherein
- in a first step a mixture, comprising at least one colour transfer component, selected from a group comprising rice, lentils, peas, noodles, corn, maize, hazelnuts, walnuts, almonds or mixtures thereof, and at least one colouring agent, is placed in a container;
- in a second step at least one egg is placed in the container and this is shaken with the component transferring the colouring agent; and
- in a third step the coloured egg is removed from the container.

2. A method according to Claim 1, **characterised in that** the first step is subdivided into a first partial step, in which at least one granular colour transfer component is placed in the container, and a second partial step, with subsequently the at least one colouring agent being placed in the container and being mixed with the colour transfer component.

3. A method according to one of the preceding claims, **characterised in that** the colouring agent taken up by the colour transfer component is reactivated by the addition of water.

4. A method according to one of the preceding claims, **characterised in that** in order to produce a multicoloured colouring on an egg steps 1 to 3 are repeated with additional colouring agents.

5. A method according to one of the preceding claims, **characterised in that** the mixture additionally comprises a fixing agent and/or binding agent.

6. A method according to one of the preceding claims, **characterised in that** inorganic and/or organic dyes and/or pigments are used as colouring agents.

7. A method according to one of the preceding claims, **characterised in that** the colouring agents are food dyes.

8. A method according to one of the preceding claims, **characterised in that** a watersoluble dye is used as colouring agent.

9. A method according to one of the preceding claims, **characterised in that** a dye which is soluble in ethanol or another non-aqueous solvent or mixtures of such is used.

10. A method according to one of the preceding claims, **characterised in that** a pigment dispersion is used as colouring agent.

11. A method according to one of the preceding claims, **characterised in that** a plastics beaker with flexible walls is used as the container.

12. A kit for producing coloured eggs using the method according to one of Claims 1 to 11, comprising at least one container, at least one colour transfer component, selected from a group comprising rice, lentils, peas, noodles, corn, maize, hazelnuts, walnuts, almonds or mixtures thereof, and at least one colouring agent.

13. A kit according to one of Claims 12, **characterised in that** it additionally comprises a fixing and/or binding agent.

14. A kit according to one of Claims 12 or 13, **characterised in that** the fixing agent is selected from a group comprising starch and/or gelatine products.

15. A kit according to one of Claims 12 to 14, **characterised in that** the fixing agent and/or binding agent is contained in the colour transfer component.

## Revendications

1. Procédé pour colorer des oeufs, dans lequel
- dans une première étape, on place, dans un récipient, un mélange comprenant au moins un composant de transfert de couleur choisi dans le groupe comportant le riz, les lentilles, les pois, les pâtes, les céréales, le maïs, les noisettes, les noix, les amandes ou des mélanges de ceux-ci, et au moins un colorant ;
- dans une deuxième étape, on met au moins un oeuf dans le récipient et on agite celui-ci avec le composant transférant le colorant ; et
- dans une troisième étape, on retire l'oeuf coloré du récipient.

2. Procédé selon la revendication 1, **caractérisé en ce que** la première étape est divisée en une première étape partielle dans laquelle on met, dans le récipient, au moins un composant de transfert de couleur granulaire et une deuxième étape partielle dans laquelle on met successivement au moins un colorant dans le récipient et on mélange celui-ci avec le composant de transfert de couleur.

3. Procédé selon l'une quelconque des revendications précédentes, **caractérisé en ce que** le colorant absorbé par le composant de transfert de couleur est réactivé par l'addition d'eau.

4. Procédé selon l'une quelconque des revendications précédentes, **caractérisé en ce qu'**on répète les étapes 1 à 3 avec d'autres colorants pour produire une coloration multicolore sur un oeuf.

5. Procédé selon l'une quelconque des revendications précédentes, **caractérisé en ce qu'**en plus, le mélange comporte un fixateur et/ou un liant.

6. Procédé selon l'une quelconque des revendications précédentes, **caractérisé en ce qu'**on utilise, comme colorants, des colorants inorganiques et/ou organiques et/ou des pigments.

7. Procédé selon l'une quelconque des revendications précédentes, **caractérisé en ce que** les colorants sont des colorants alimentaires.

8. Procédé selon l'une quelconque des revendications précédentes, **caractérisé en ce qu'**on utilise, comme colorant, un colorant soluble dans l'eau.

9. Procédé selon l'une quelconque des revendications précédentes, **caractérisé en ce qu'**on utilise un colorant qui est soluble dans l'éthanol ou un autre solvant non aqueux ou des mélanges de ceux-ci.

10. Procédé selon l'une quelconque des revendications précédentes, **caractérisé en ce qu'**on utilise, comme colorant, une dispersion de pigment.

11. Procédé selon l'une quelconque des revendications précédentes, **caractérisé en ce qu'**on utilise, comme récipient, un gobelet en matière plastique à parois souples.

12. Kit de fabrication d'oeufs colorés d'après le procédé selon l'une quelconque des revendications 1 à 11, comprenant au moins un récipient, au moins un composant de transfert de couleur choisi dans le groupe comportant le riz, les lentilles, les pois, les pâtes, les céréales, le maïs, les noisettes, les noix, les amandes ou des mélanges de ceux-ci, et au moins un colorant.

13. Kit selon la revendication 12, **caractérisé en ce qu'**il présente en plus un fixateur et/ou un liant.

14. Kit selon l'une quelconque des revendications 12 à 13, **caractérisé en ce que** le fixateur est choisi dans le groupe comprenant l'amidon et/ou des produits gélatineux.

15. Kit selon l'une quelconque des revendications 12 à 1, **caractérisé en ce que** le fixateur et/ou le liant est/sont contenus dans le composant de transfert de couleur.
